# EUROPEAN PATENT APPLICATION

(11) **EP 3 944 179 A1**
(43) Date of publication of application: **26.01.2022**
(21) Application number: 19920504.8
(22) Date of filing: 22.03.2019
(51) Int. Cl.: G06Q 50/04, G06Q 10/10

(54) **DEVICE AND METHOD FOR AUTOMATICALLY PRODUCING ELECTRICAL DESIGN DRAWING**

(30) Priority: 19.03.2019 KR 20190031283
(71) Applicant: Kim, Hyeon, Seoul 04948 (KR)
(72) Inventor: Kim, Hyeon, Seoul 04948 (KR)
(74) Representative: Frenkel, Matthias Alexander
(86) International application number: PCT/KR2019/003378
(87) International publication number: WO 2020/189833

(57) **Abstract**

The present invention relates to a device and a method for automatically producing an electrical design drawing. The present invention may provide a device and a method for automatically producing an electrical design drawing, the device comprising: an information input unit for receiving, through a spreadsheet application program, input component specification information required for an electrical circuit design; a drawing production unit for schematizing an electrical circuit design on the basis of the component specification information input to the information input unit, and producing an electrical circuit design drawing; and a screen output unit for outputting, through a screen, the electrical circuit design drawing produced by the drawing production unit, whereby design drawings for a PCL and an input/output controller are automatically produced, so that a data-based standard design corresponding to the international standards is possible.

## Description

### [Technical Field]

The present invention relates to a device and method for automatically producing an electrical design drawing, and more specifically, to a device and method for automatically producing design drawings for a programmable logic controller (PLC) and an input/output controller.

### [Background Art]

Enterprise resource planning (ERP) refers to an enterprise-wide resource management system or enterprise-wide integrated system which integrates and manages business activity processes such as production, logistics, finance, accounting, sales, purchasing, inventory, and the like within a company and which shares information generated in the company and helps production of new information and quick decision-making.

Generally, the ERP includes not only production (manufacturing) tasks, but also pure management tasks and management support functions such as finance and accounting, customers/products, supply chains, corporate services, human resources, and the like.

It refers to a system which integrates and manages product information throughout from the definition of product modification to design, development, manufacturing, shipment, and customer service. Generally, it is built in conjunction with ERP. Recently, the concept has been expanded to product lifecycle management (PLM).

Recently, as part of strengthening competitiveness, many companies are actively introducing automated manufacturing systems. Accordingly, the level of automation is advanced and a logistics flow or process control method at a production site becomes more and more complicated. In factory automation, a programmable logic controller (PLC) is mostly adopted as a main controller.

Meanwhile, since most drawings for a PLC design are implicit drawings, there is a risk that necessary information is omitted. In addition, the drawings are prepared at the designer's discretion and thus there is a difficulty in maintaining standards.

In addition, when a designer manually works on drawings arbitrarily, it can be difficult to capitalize engineering data as a graphic-based design, and communication problems between internal and external partners can occur.

As the designer arbitrarily works on drawings, there is a limitation of providing low-quality drawings, and in addition, there is a problem that unnecessary time is consumed by repeatedly performing similar simple designs.

Further, the necessary documents should be manually prepared after circuit design. However, circuit design and documentation are made individually and centered on each designer and thus there is a risk of occurrence of human error.

Further, problems in preparation or ordering due to inconsistencies between drawings and documents often occur. It is difficult to grasp the exact quantity of the appropriate inventory, and thus there is also a problem of unnecessarily increasing the inventory of components. There is a problem of wasting human resources for engineers due to manual work.

### [Disclosure]

### [Technical Problem]

The present invention is derived from such a technical background and directed to providing a device and method for automatically producing an electrical design drawing capable of building a data-based design standardization and automation environment to improve business processes and improve engineering work efficiency.

Further, the present invention is directed to providing a device and method for automatically producing an electrical design drawing capable of securing company competitiveness, shortening work hours, and being commercialized through automated work processes.

### [Technical Solution]

The present invention for achieving the above object includes the following configurations.

A device for automatically producing an electrical design drawing according to one embodiment of the present invention includes: an information input unit configured to receive component specification information required for an electrical circuit design through a spreadsheet application program; a drawing production unit configured to schematize an electrical circuit design on the basis of the component specification information input to the information input unit, and produce an electrical circuit design drawing; and a screen output unit configured to output the electrical circuit design drawing produced by the drawing production unit through a screen.

Meanwhile, in one embodiment of the present invention, a method of automatically producing an electrical design drawing performed in a device for automatically producing an electrical design drawing, includes: receiving component specification information required for an electrical circuit design through a spreadsheet application program; schematizing an electrical circuit design on the basis of the received component specification information, and producing an electrical circuit design drawing; and outputting the produced electrical circuit design drawing through a dedicated interface screen.

### [Advantageous Effects]

According to the present invention, a device and method for automatically producing an electrical design drawing capable of performing a data-based standard design corresponding to international standards by automatically producing design drawings for a PCL and an input/output controller can be provided.

Further, informationization of engineering know-how and design data can be performed, and there is an effect of reducing human error and reducing a design time.

Further, an effect of reducing the working hours of engineers (workers) and increasing usability and efficiency is derived.

In addition, an effect of building a standard work process with continuous stability, quickness, and efficiency of design and operation is derived.

### [Description of Drawings]

FIG. 1 is a view illustrating a configuration of a device for automatically producing an electrical design drawing according to one embodiment of the present invention.
FIG. 2 is a conceptual diagram of the device for automatically producing an electrical design drawing according to one embodiment of the present invention.
FIG. 3 is a flow chart of a method of automatically producing an electrical design drawing according to one embodiment of the present invention.
FIGS. 4 and 5 are exemplary views for describing a component database structure according to one embodiment of the present invention.
FIGS. 6A and 6B are exemplary views of a graphic interface for component data input according to one embodiment of the present invention.
FIG. 7 is an exemplary view for describing a process of extracting component specification items according to one embodiment of the present invention.
FIG. 8 is an exemplary view of a programmable logic controller (PLC)/IO detailed input screen according to one embodiment of the present invention.
FIG. 9 is an exemplary view of a component selection screen in the graphic interface for component data input according to one embodiment of the present invention.
FIG. 10 is an exemplary view of a remote card designation screen in the graphic interface for component data input according to one embodiment of the present invention.
FIGS. 11 to 13 are exemplary views of a pop-up window which asks whether or not to output component data input data.
FIGS. 14A and 14B are exemplary views of an address input screen in the graphic interface for component data input according to one embodiment of the present invention.
FIG. 15 is an exemplary view of a device tag input screen in the graphic interface for component data input according to one embodiment of the present invention.
FIGS. 16 to 21 are exemplary views of a screen which outputs a schematized electrical circuit design drawing through a dedicated interface screen.

### [Modes of the Invention]

It should be noted that the technical terms used in the present invention are only used to describe specific embodiments, and are not intended to limit the present invention. Further, the technical terms used in the present invention should be interpreted with meanings generally understood by those of ordinary skill in the art, unless otherwise defined in the present invention, and should not be interpreted in an excessively comprehensive sense or an excessively narrow sense.

Hereinafter, preferable embodiments of the present invention will be described in detail with reference to the accompanying drawings.

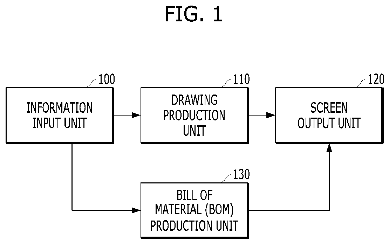

FIG. 1 is a view illustrating a configuration of a device for automatically producing an electrical design drawing according to one embodiment of the present invention.

In one embodiment, the device for automatically producing an electrical design drawing may be developed as a standalone window-type application program to automatically produce electrical design drawings. In this case, the window-type application program may be provided in a form of a program setup file. In addition, a manager for issuing and managing licenses may be separately provided.

As shown in FIG. 1, the device for automatically producing an electrical design drawing according to one embodiment of the present invention includes an information input unit 100, a drawing production unit 110, a screen output unit 120, and a bill of material (BOM) production unit 130.

The information input unit 100 receives component specification information required for an electrical circuit design through a spreadsheet application program.

A spreadsheet is a program which processes data by inputting numeric or character data into a table and manipulating the numeric or character data, and includes not only simple calculations, but also graphic functions, database functions, and word processing functions which display data as charts.

Further, the spreadsheet is an application program which may efficiently perform tasks such as numerical calculations, statistics, and charts, may store information in a cell which is a space where horizontal and vertical rows meet, and has a calculator function, and thus may simply perform various calculations. The spreadsheet includes various functions such as a graphic function for drawing charts or graphs, a communication function, providing various functions, and the like, and thus may be efficiently used.

For example, an Excel program is a representative spreadsheet, and may perform automatic calculation, chart preparation, document preparation, and the like. Accordingly, the Excel program is used in various fields, such as a payroll table, a grade management table, an inventory management table, and the like. There is also a Google spreadsheet, and the Google spreadsheet may also be prepared on a PC or mobile device. There is an advantage that many people who have shared prepared spreadsheet documents may edit the spreadsheet documents together in real time.

In one embodiment of the present invention, like the above, the spreadsheet is interpreted as encompassing all application programs capable of entering numbers or characters into a worksheet and performing various desired functions, such as calculating, managing, charting, searching, and the like.

The drawing production unit 110 schematizes the electrical circuit design on the basis of the component specification information input to the information input unit, and produces an electrical circuit design drawing.

The screen output unit 120 outputs the electrical circuit design drawing produced by the drawing production unit 110 through a dedicated interface screen.

In one embodiment, the dedicated interface screen may be a screen on which EPLAN, which is a design tool dedicated to electricity, or general-purpose CAD (AutoCAD) is driven.

According to one aspect of the present invention, the information input unit 100 further receives manufacturer information through the spreadsheet application program.

Further, the component specification items corresponding to the manufacturer selected from the component database are extracted according to the received manufacturer information to receive the component specification information for the extracted component specification items.

In this case, the component database includes information on at least one of component classification, a component model name, a component description, a connection point type, and the number of connection points for each manufacturer.

Further, the information input unit 100 provides an address setting value input window of a component differently for each manufacturer.

In addition, the BOM production unit 130 automatically produces a bill of material (BOM) file through the spreadsheet application program on the basis of the component specification information input to the information input unit 100.

Accordingly, there is an effect that a correct quantity of the appropriate inventory can be grasped, and thus a problem of unnecessarily increasing the inventory of components can be solved, and waste of human resources and human error for engineers due to manual work can be reduced.

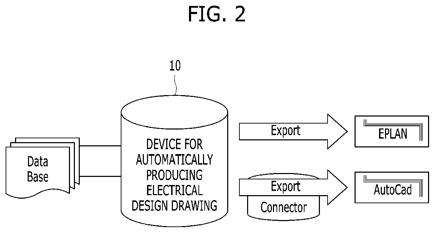

FIG. 2 is a conceptual diagram of a device for automatically producing an electrical design drawing according to one embodiment of the present invention.

As shown in the drawings, a device 10 for automatically producing an electrical design drawing according to one embodiment of the present invention provides an interface with EPLAN, which is a design tool dedicated to electricity, or general-purpose CAD (AutoCAD) on the basis of a database based on the form of the spreadsheet application program

More specifically, the device for automatically producing an electrical design drawing according to one embodiment performs various processes necessary for data collection and drawing production using existing Excel data. Further, the completed data may be linked with other programs in XML and Text formats.

That is, the device 10 for automatically producing an electrical design drawing according to one embodiment of the present invention may perform data-based standard design corresponding to international standards by producing used components data ERP (PDM) linked data, and performing graphic-based design.

That is, the device 10 for automatically producing an electrical design drawing according to one embodiment of the present invention may provide a text file format data import environment. Further, block names and n number of converted text may correspond to data. In addition, a user-selectable outline designation environment is provided.

It is possible to further provide a function of performing International Electrotechnical Commission (IEC)/ National Fire Protection Association (NFPA) standard conversion by changing a library folder through an automatic producing function of the drawings. Further, a function which enables automatic collection of multiple CAD drawings is added. A batch conversion function of layers used in drawings may also be added.

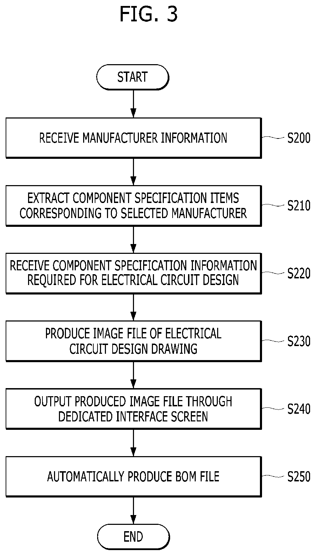

FIG. 3 is a flow chart of a method of automatically producing an electrical design drawing according to one embodiment of the present invention.

First, the method of automatically producing an electrical design drawing performed in the device for automatically producing an electrical design drawing includes an operation of receiving manufacturer information through a spreadsheet application program (S200).

In this case, the operation of receiving the component specification information required for the electrical circuit design is performed on the basis of the component database.

Further, the component specification items corresponding to the manufacturer selected from the component database according to the received manufacturer information are extracted (S210).

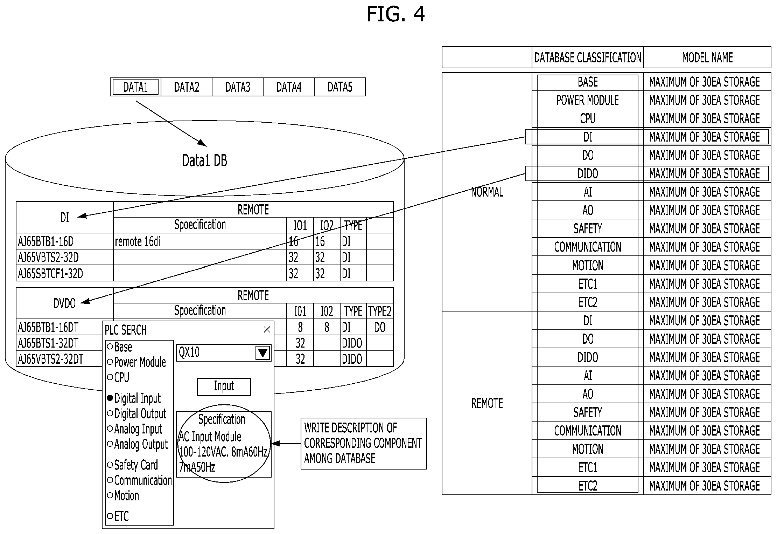

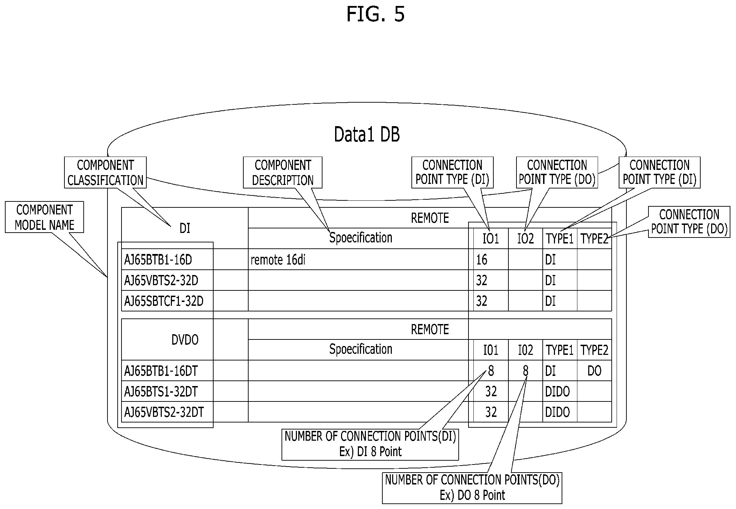

FIGS. 4 and 5 are exemplary views for describing a component database structure according to one embodiment of the present invention.

As shown in FIG. 4, a database selection window needs to be classified by classification of databases for a quick search (Data1, Data2...). Further, when the classification text of the database is changed, the text of the database selection window in a portion indicated in green in FIG. 3 is also identically changed.

In addition, in this case, when a component is selected, brief characteristic information about the component is further displayed.

In addition, as shown in FIG. 5, the component database includes information on at least one of component classification, a component model name, a component description, a connection point type, and the number of connection points for each manufacturer.

In this case, as many rows as the number of connection points are added when an IO Point is produced. Further, an IO type (DI, DO, and the like) is an identifier for distinction when an address is designated. For example, DI address designation may be set to x000, and DO address designation may be set to Y000.

The component specification information required for the electrical circuit design is received through the spreadsheet application program (S220). In this case, the component specification information is input for component specification items differently extracted according to manufacturers.

Further, when the component specification information is received, the address setting value input window of the component is differently provided for each manufacturer.

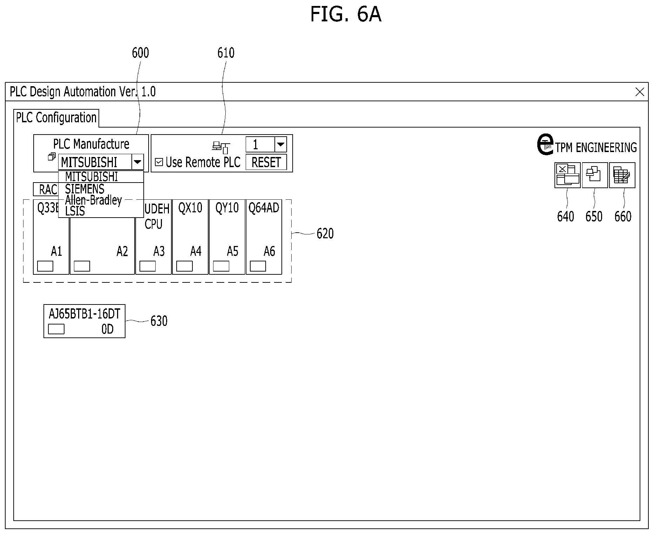

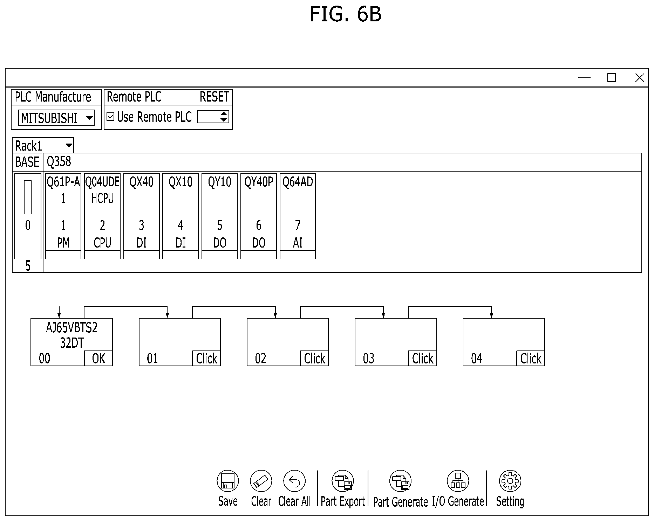

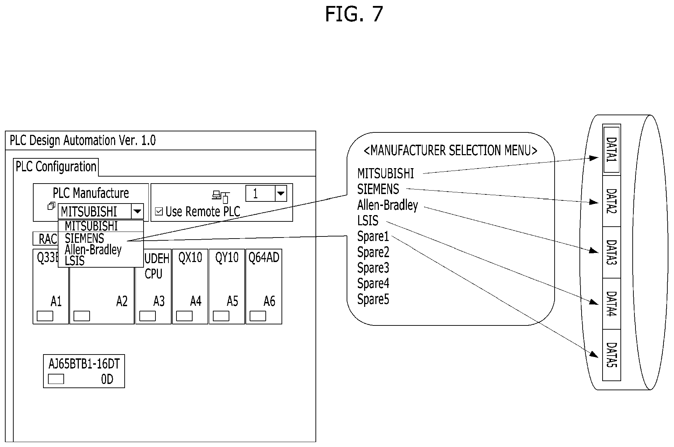

FIG. 6A is an exemplary view of a graphic interface for component data input according to one embodiment of the present invention, FIG. 6B is an exemplary view of a graphic interface for component data input according to another embodiment of the present invention, and FIG. 7 is an exemplary view for describing a process of extracting component specification items according to one embodiment of the present invention.

As shown in FIG. 6A, a user may select a desired component manufacturer from among selection lists 600.

Accordingly, as shown in FIG. 7, the component specification information corresponding to the manufacturer selected by the user is extracted from the component database. That is, when selecting the manufacturer, only the component data corresponding to the selected manufacturer from the entire component databases is called. In this case, some of the component databases may be added or an edit screen may be provided. According to one embodiment, adding the database may be realized by calling a corresponding database portion in an Excel import program and performing data edit in a displayed state in the Excel program.

Further, in a description with reference to FIG. 6A, according to one embodiment of the present invention, a remote programmable logic controller (PLC) may be selected through a graphic interface for inputting component data (610).

In addition, a number and description of the selected component are displayed (620). In this case, a displayed item may be a slot configuration of a main PLC.

In addition, a configuration region of the remote PLC may be displayed (630). In this case, the remote configuration is different for each manufacturer, and thus may be differently set depending on the selected manufacturer. For example, when the manufacturer is Mitsubishi or LSIS, single batch may be used, and when the manufacturer is Siemens or AB, the remote configuration may be a slot configuration type like a main PLC configuration.

In addition, the graphic interface for inputting component data further includes an Excel output button 640 of the selected component list, an EPLAN output button 650 for the selected component list in Excel format, and a button 660 for moving to a PLC I/O detailed input screen.

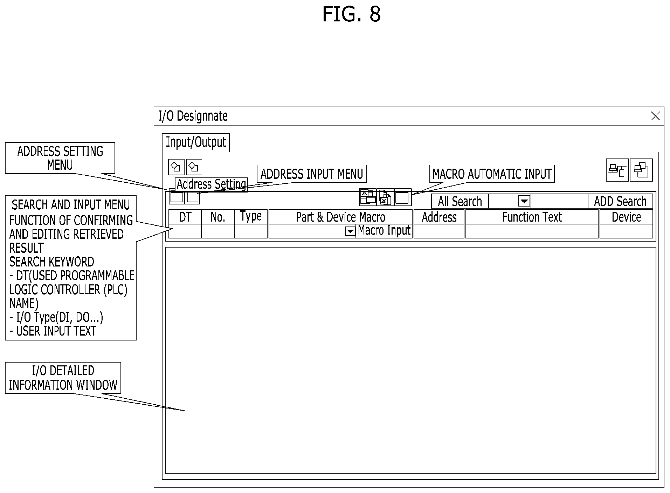

FIG. 8 is an exemplary view of a PLC/IO detailed input screen according to one embodiment of the present invention.

As shown in FIG. 8, it is possible to save a currently worked component data value or to perform a function to recall the saved value. In this case, I/O detailed information window data may be controlled up/down by scrolling a mouse.

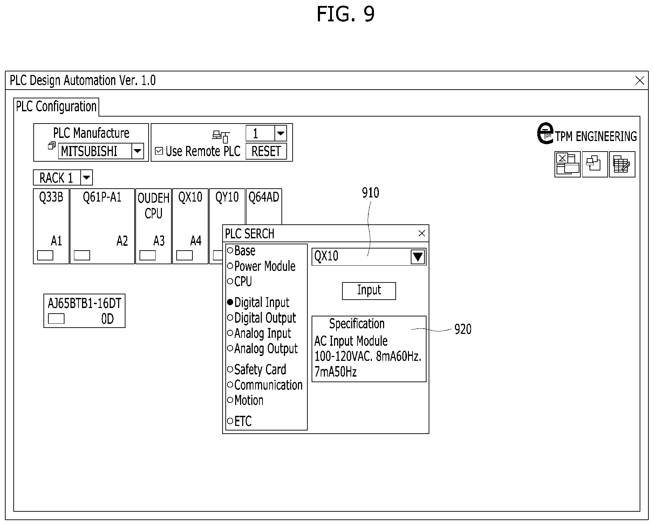

FIG. 9 is an exemplary view of a component selection screen in the graphic interface for component data input according to one embodiment of the present invention.

As shown in FIG. 9, the components stored in the component database may be classified by type and are classified into categories for a quick search. When a desired category is selected, a component list belonging to the category may be displayed (910), and a detailed description of the selected component may be further displayed (920).

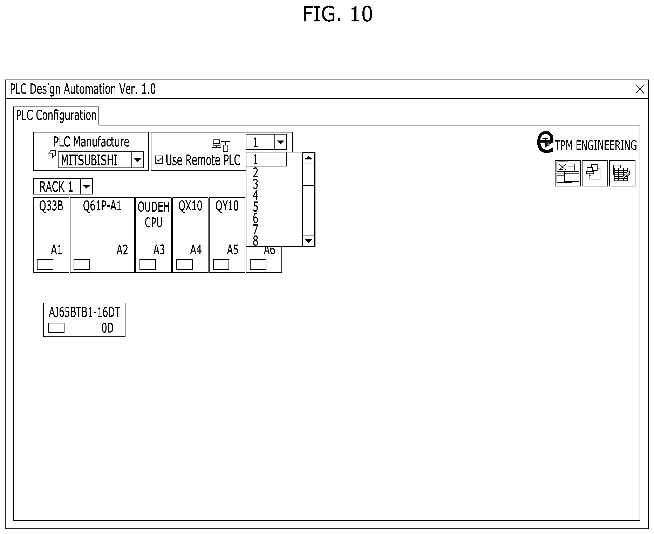

FIG. 10 is an exemplary view of a remote card designation screen in the graphic interface for component data input according to one embodiment of the present invention.

In one embodiment, as shown in FIG. 10, a PLC remote card may also be designated. When the PLC remote card is selected, a selection screen for the corresponding component is displayed.

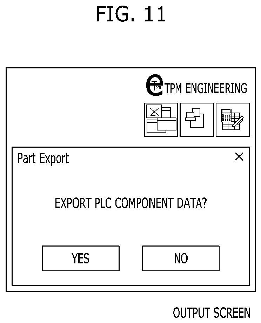

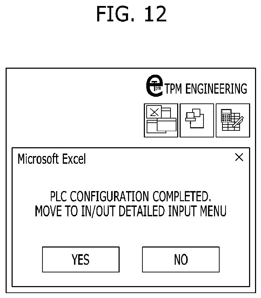

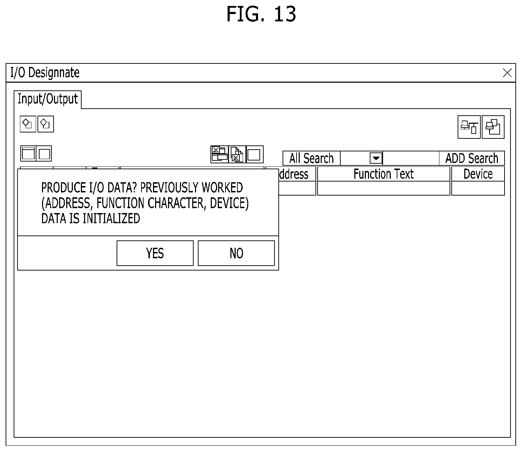

FIGS. 11 to 13 are exemplary views of a pop-up window which asks whether or not to output component data input data.

In one embodiment, as shown in FIGS. 11 to 13, the graphic interface for component data input may display a pop-up message window which displays important messages. In this case, it is also possible to further include a status progress bar during a task which takes a lot of loading. Further, a tooltip including a description of a corresponding menu may be displayed on a screen providing a list of selectable menus during key scroll access.

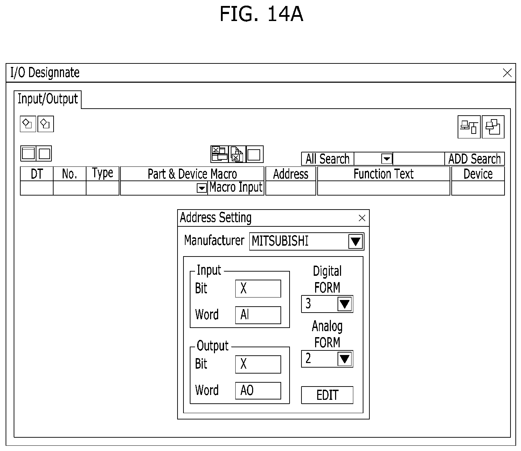

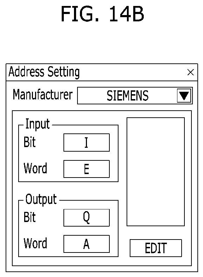

FIGS. 14A and 14B are exemplary views of an address input screen in the graphic interface for component data input according to one embodiment of the present invention.

In one aspect of the present invention, when the component specification information is input, the address setting value input window of the component is differently provided for each manufacturer.

That is, as shown in FIGS. 14A and 14B, the address setting value input window is automatically loaded and displayed in a different format for each manufacturer. Specifically, when the manufacturer is one of MITSUBISHI, AB, and LSIS, an input window set with a maximum of 5 digits with 3-digit digital input (X000), 3-digit digital output (Y000), 2-digit analog input (AI00), and 2-digit analog output (AO00) is displayed.

On the other hand, when the manufacturer is SIEMENS, an input window set with a maximum of 5 digits with 1-digit digital input (IO.0), 1-digit digital output (QO.0), 1-digit analog input (EO.0), and 2-digit analog output (AO.0) is displayed.

Meanwhile, according to macro button input in FIG. 14A, a function of exporting/importing data to Excel may be further provided.

When data is exported, a table with DT /NO /TYPE /MACRO /ADDRESS /Function Text /Device columns may be produced and exported with an Excel program.

Further, when data is imported, automatic data loading is performed with Vlookup based on the address. In this case, since the data column may be different, data loading may be implemented and performed when Address/Function/Device information matches.

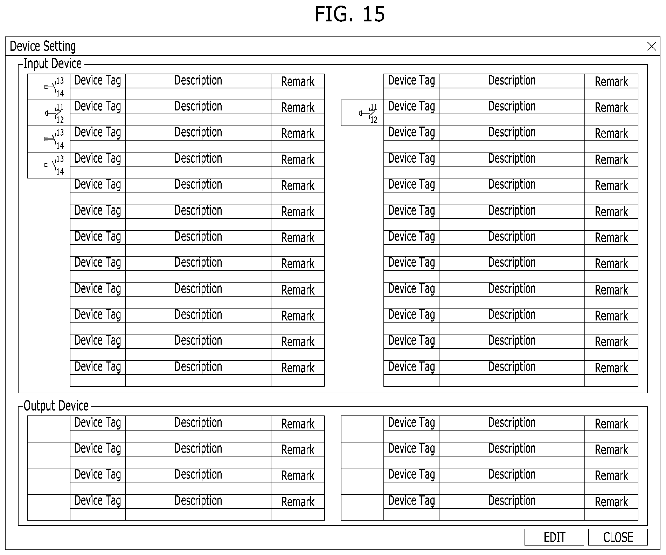

FIG. 15 is an exemplary view of a device tag input screen in the graphic interface for component data input according to one embodiment of the present invention.

In one embodiment, after importing Excel I/O list including input values of specifications of components, the text for Vlookup or IF function processing is set by automatically processing the Excel I/O list. Specifically, as shown in FIG. 15, the device tag input screen is divided into four region: DI, DO, AI, and AO. Further, the device tag input screen may be implemented to include a maximum of 20 rows in one region, and to include a maximum of 5 character input spaces including a component image in one row.

It is obvious that the configuration and design of the device tag input screen are merely exemplary and are interpreted to encompass various modifications.

In addition, the graphic interface for component data input according to one embodiment of the present invention may further provide a screen which displays the component and I/O usage information. Specifically, it is possible to output a screen which displays a list of the used PLC components, the total number of used points, and the quantity used and the quantity of spares for DI, DO, AI, and AO.

The electric circuit design drawing is schematized based on the component specification information received through this graphic interface screen, and thus produced (S230).

First, the component specification information received through the graphic interface screen may be produced in a form of a text file.

Further, the electrical circuit design drawing may be converted to be schematized based on the form of the produced text file. In addition, the electrical circuit design drawing in which the electrical circuit is schematized is output through the dedicated interface screen (S240).

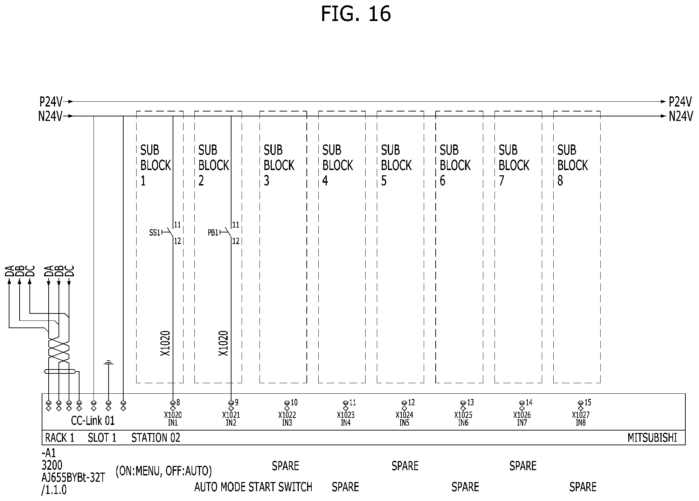

FIGS. 16 to 21 are exemplary views of a screen which outputs a schematized electrical circuit design drawing through a dedicated interface screen.

Specifically, FIG. 16 is a view illustrating an International Electrotechnical Commission (IEC) PLC sample and illustrates a schematic circuit configuration of an input card including one main block and a maximum of eight sub-blocks.

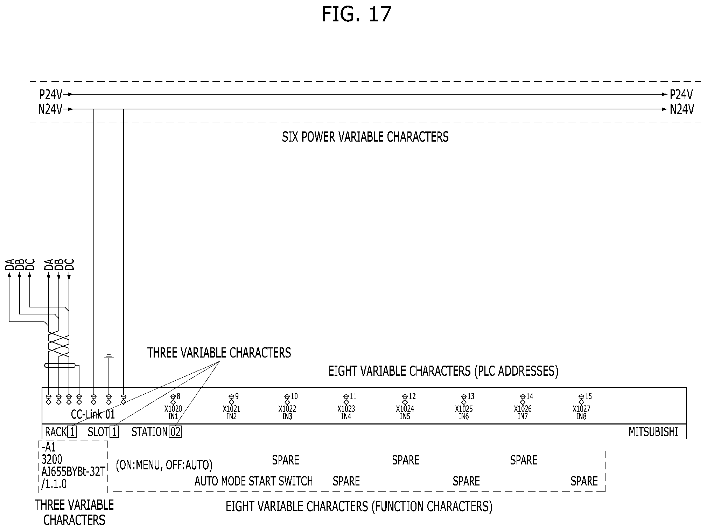

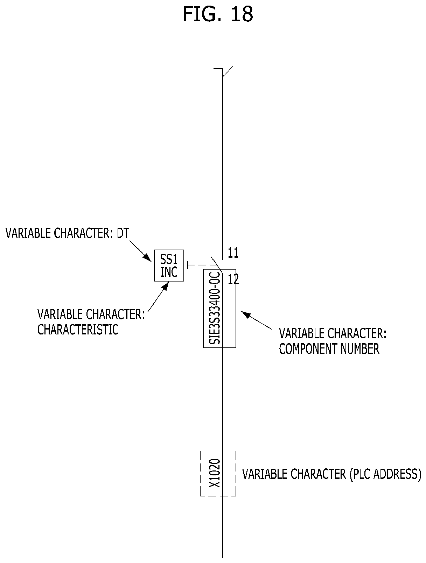

FIG. 17 is a view illustrating the main block of the input card as the IEC PLC sample in detail, and FIG. 18 is a view illustrating the sub-blocks of the input card as the IEC PLC sample in detail.

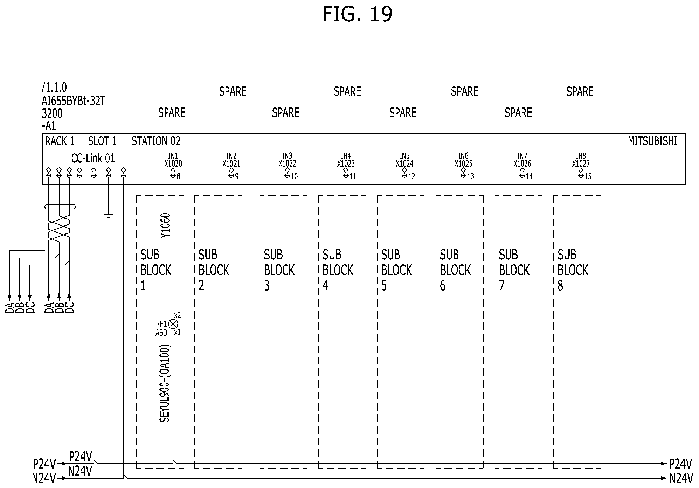

Meanwhile, FIG. 19 s is a view illustrating an IEC PLC sample and illustrates a schematic circuit configuration of an output card including one main block and a maximum of eight sub-blocks.

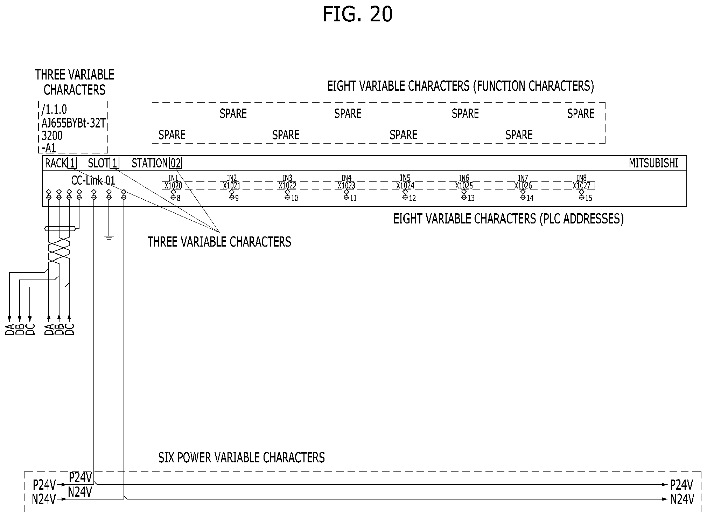

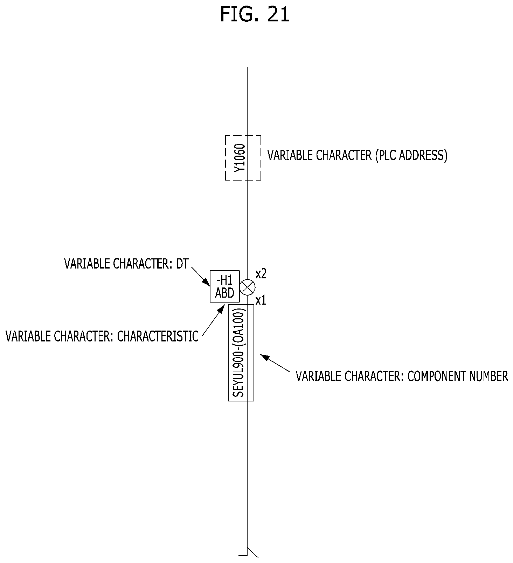

FIG. 20 is a view illustrating the main block of the output card as the IEC PLC sample in detail, and FIG. 21 is a view illustrating the sub-blocks of the output card as the IEC PLC sample in detail.

After that, a BOM file may be automatically produced through the spreadsheet application program based on the received component specification information (S250).

The BOM refers to a list, a chart, or a drawing which displays a relationship between parent items and components, a use amount, units, and the like for all items. The parent item is an item manufactured from one or more components, and the component is an item which should undergo at least one process to be converted into the parent item.

In one embodiment, the produced BOM may be used as a purchase order, and may be produced by outputting a list of PLC components selected in a certain form.

### [Reference numerals]

100: information input unit;
110: drawing production unit
120: screen production unit;
130: BOM production unit

## Claims

1. A device for automatically producing an electrical design drawing, comprising:
an information input unit configured to receive component specification information required for an electrical circuit design through a spreadsheet application program;
a drawing production unit configured to schematize an electrical circuit design on the basis of the component specification information input to the information input unit, and produce an electrical circuit design drawing; and
a screen output unit configured to output the electrical circuit design drawing produced by the drawing production unit through a screen.

2. The device of claim 1, wherein the information input unit further receives information on a manufacturer through the spreadsheet application program, and extracts component specification items corresponding to the manufacturer selected from a component database according to the received information on the manufacturer to receive the component specification information for the extracted component specification items.

3. The device of claim 2, wherein the component database includes information on at least one of component classification, a component model name, a component description, a connection point type, and the number of connection points for each manufacturer.

4. The device of claim 2, wherein the information input unit provides an address setting value input window of a component differently for each manufacturer.

5. The device of claim 1, further comprising a bill of material (BOM) production unit configured to automatically produce a bill of material file through the spreadsheet application program on the basis of the received component specification information.

6. A method of automatically producing an electrical design drawing performed in a device for automatically producing an electrical design drawing, the method comprising:
receiving component specification information required for an electrical circuit design through a spreadsheet application program;
schematizing an electrical circuit design on the basis of the received component specification information, and producing an electrical circuit design drawing; and
outputting the produced electrical circuit design drawing through a dedicated interface screen.

7. The method of claim 6, further comprising:
before receiving the component specification information, receiving information on a manufacturer through the spreadsheet application program; and
extracting component specification items corresponding to the manufacturer selected from a component database according to the received information of the manufacturer,
wherein the receiving of the component specification information comprises receiving the component specification information for the extracted component specification items.

8. The method of claim 7, wherein the component database includes information on at least one of component classification, a component model name, a component description, a connection point type, and the number of connection points for each manufacturer.

9. The method of claim 7, wherein the receiving of the component specification information comprises providing an address setting value input window of a component differently for each manufacturer.

10. The method of claim 6, further comprising automatically producing a bill of material file through the spreadsheet application program on the basis of the received component specification information.
